# FASCICULE DE BREVET EUROPEEN

(11) **EP 2 043 362 B1**
(45) Date de publication et mention de la délivrance du brevet: **28.12.2016**
(21) Numéro de dépôt: 08164923.8
(22) Date de dépôt: 23.09.2008
(51) Int. Cl.: H04N 5/335, H04N 5/3745

(54) **Matrice de pixels dotés de régulateurs de tension**
Pixelmatrix, die mit Spannungsreglern ausgestattet ist
Pixel matrix equipped with voltage regulators

(30) Priorité: 27.09.2007 FR 0757900
(43) Date de publication de la demande: 01.04.2009
(73) Titulaire: Commissariat à l'Énergie Atomique et aux Énergies Alternatives, 75015 Paris (FR)
(72) Inventeur: Arques, Marc, 38100 Grenoble (FR); Martin, Jean-Luc, 38620 Saint Geoire en Valdaine (FR); Peizerat, Arnaud, 38000 Grenoble (FR)
(74) Mandataire: Ilgart, Jean-Christophe

(56) Documents cités:
- EP-A- 0 952 615
- EP-A1- 1 061 732
- US-A- 4 163 161
- US-A1- 2004 178 349
- US-A1- 2007 205 802
- US-B2- 7 732 748

## Description

### DOMAINE TECHNIQUE

L'invention est relative au domaine des dispositifs microélectroniques formés de cellules élémentaires agencées en matrice et comprenant au moins une pluralité de cellules connectées à une ou plusieurs lignes conductrices de polarisation prévues pour acheminer un potentiel donné. L'invention s'applique en particulier aux matrices de cellules de grandes tailles, telles que les matrices de capteurs de rayonnement électromagnétiques, par exemple de rayons X, en particulier réalisées en technologie CMOS.

L'invention permet la mise en oeuvre de dispositifs microélectroniques matriciels formés de cellules élémentaires de grandes dimensions, comprenant des moyens pour pallier aux phénomènes de variations de potentiel le long des lignes destinées à appliquer un potentiel donné, par exemple d'alimentation ou de référence à une pluralité de cellules de la matrice.

### ART ANTERIEUR

Les dispositifs microélectroniques détecteurs de rayonnements électromagnétiques sous forme de matrices de pixels, lorsqu'ils intègrent à l'intérieur des pixels un dispositif de traitement, par exemple, au moins un élément d'amplification, ou un circuit de comptage, ou de numérisation, ont généralement une consommation importante, et présentent des chutes ohmiques, le long des lignes ou colonnes de la matrice, d'autant plus importantes que l'on s'éloigne des points d'alimentation auxquelles les lignes ou colonnes de la matrice sont connectés.

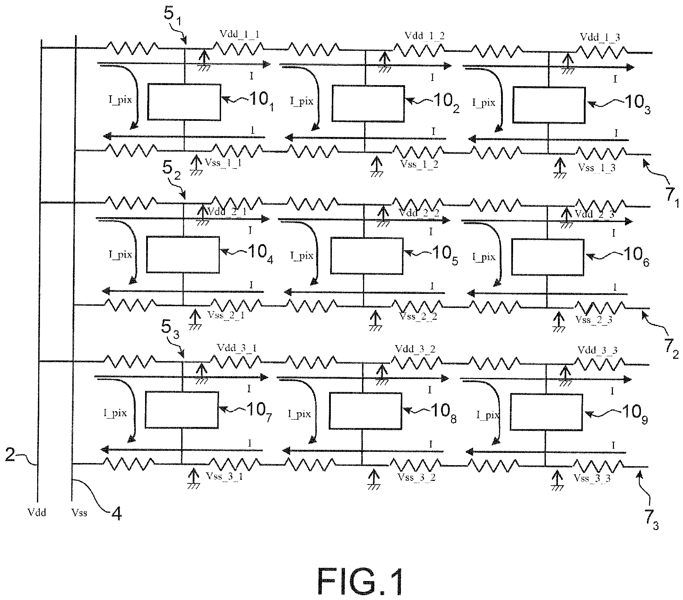

La figure 1 illustre un phénomène de chute ohmique pour une matrice 3 x 3 de pixels notés 10₁,...,10₉ connectés à une ligne d'alimentation 2 acheminant un potentiel Vdd par exemple égal à 1,2 Volts ou de 3,3 volts et une ligne de masse 4 acheminant un potentiel Vss par exemple de l'ordre de 0 Volt, par l'intermédiaire respectivement d'une première pluralité de lignes conductrices 5₁, 5₂, 5₃, et d'une deuxième pluralité de lignes conductrices 7₁, 7₂, 7₃.

Dans la pratique, les matrices d'un capteur ou d'un détecteur de rayonnement électromagnétique sont généralement beaucoup plus grandes que celles représentées sur la figure 1. Par exemple, si l'on considère une matrice de 2000 x 2000 pixels avec des pixels consommant chacun 10 µW, ce qui peut correspondre par exemple à un courant de 3 µA sous 3,3 Volts, une consommation globale de la matrice de l'ordre de 40 Watts peut être atteinte.

Avec des pixels de dimensions 100 µm x 100 µm, ce qui correspondrait à une matrice de 20 cm x 20 cm, une telle puissance de 40 W rapportée à une telle surface de matrice pourrait être relativement acceptable. Cependant, il se pose le problème de l'alimentation des pixels d'une telle matrice. Si l'alimentation respective des pixels est distribuée par des bus en ligne ou en colonne, la ligne d'alimentation par exemple au potentiel Vdd et la ligne de masse à un potentiel Vss doivent servir 2000 pixels.

Si on réalise par exemple ces bus ou ces lignes conductrices sous forme de pistes d'aluminium de l'ordre de 20 µm de large, et ayant une résistance par carré de l'ordre de 30 mOhms, alors on obtient des bus de résistance de l'ordre de 300 Ohms. Le courant total à apporter par ces bus est de l'ordre de 2000 x 3 µA. Ce courant décroît linéairement avec la progression le long des lignes conductrices 5₁, 5₂, 5₃.

La chute de tension en bout de ligne peut être alors de l'ordre de 0,9 V, de sorte que les potentiels d'alimentations localisés Vdd_11, Vdd_12, Vdd_13,..., Vdd_31, Vdd_32, Vdd_33, appliqués aux pixels et les potentiels de masse Vss_11, Vss_12, Vss_13,..., Vss_31, Vss_32, Vss_33 peuvent varier de manière importante d'un pixel à l'autre. Considérons par exemple une alimentation globale entre un potentiel de masse Vss de 0 Volt et un potentiel d'alimentation Vdd de 3,3 volts : un pixel en bord ou extrémité de matrice est alimenté entre 0 V et 3,3 V, tandis qu'un pixel en bout de matrice est susceptible d'être alimenté entre (0V + 0.9V) et (3.3V - 0.9V), soit entre 0.9 et 2.4V. Le fonctionnement des pixels d'une telle matrice est ainsi susceptible de varier fortement en fonction de sa position dans la matrice.

Le document US 2004/178349 A1 divulgue un dispositif microélectronique matriciel comprenant une pluralité de cellules formées d'une diode et d'un transistor TFT agencée selon une matrice, ainsi qu'un élément régulateur de tension connecté à un filtre BF. Ce document fait référence au problème de bruit généré par un circuit générateur de potentiel de référence dans un dispositif imageur doté d'un tel circuit

Le document US 2007/205802 A1 divulgue un dispositif microélectronique matriciel comprenant une pluralité de cellules agencées selon une matrice, des lignes conductrices prévues pour acheminer un potentiel donné et auxquelles respectivement les cellules d'une même rangée de cellules de la matrice sont reliées, des éléments régulateurs de tension. Il vise à résoudre le problème de création de thyristors parasites.

Le document US 7732748 B2 divulgue un dispositif microélectronique comprenant des éléments agencés selon une matrice et des éléments régulateurs de tension qui fournissent une tension d'alimentation régulé aux lignes d'alimentation de ladite matrice. Les dispositifs décrits dans ces documents sont susceptibles de subir des chutes de tension le long des lignes de polarisation, en particulier lorsque la matrice a une taille importante.

Il se pose le problème de trouver un nouveau dispositif microélectronique formé d'une matrice de pixels, qui ne comporte pas les inconvénients mentionnés ci-dessus.

### EXPOSÉ DE L'INVENTION

L'invention concerne un dispositif microélectronique matriciel comprenant :
- une pluralité de cellules agencées selon une matrice,
- une ou plusieurs lignes conductrices prévues pour acheminer un potentiel donné et auxquelles respectivement une ou plusieurs cellules d'une rangée de cellules de la matrice sont reliées,
- une pluralité d'éléments régulateurs de tension,
lesdits éléments régulateurs étant connectés respectivement entre une cellule de ladite pluralité de cellules et une desdites lignes conductrices, dans lequel chacun desdits éléments régulateurs est respectivement connecté à une seule cellule parmi ladite pluralité de cellules, ledit potentiel donné servant de potentiel de polarisation desdits éléments régulateurs, lesdits éléments régulateurs étant prévus respectivement pour appliquer à chaque cellule de ladite pluralité de cellules un potentiel de polarisation régulé.

Selon une possibilité, lesdites lignes conductrices peuvent comprendre une ou plusieurs lignes conductrices d'alimentation prévues pour acheminer chacune un potentiel d'alimentation. Dans ce cas, le dispositif peut comprendre parmi ladite pluralité d'éléments régulateurs de tension, un ou plusieurs éléments régulateurs de potentiel d'alimentation.

Lesdits éléments régulateurs de potentiel d'alimentation peuvent être connectés respectivement entre une cellule de ladite pluralité de cellules et une desdites lignes conductrices d'alimentation, polarisés à l'aide du potentiel d'alimentation, et prévus respectivement pour appliquer à ladite cellule un potentiel d'alimentation régulé.

Selon une autre possibilité, lesdites lignes conductrices peuvent comprendre une ou plusieurs lignes conductrices prévues pour être placées à un potentiel de référence ou de masse, le dispositif comprenant parmi ladite pluralité d'éléments régulateurs de tension un ou plusieurs éléments régulateurs de potentiel de masse, lesdits éléments régulateurs de potentiel de masse étant polarisés à l'aide du potentiel de masse et prévus respectivement pour appliquer à ladite cellule un potentiel de masse régulé.

Selon une première possibilité, les éléments régulateurs peuvent comporter respectivement au moins un transistor de régulation, prévu pour être agencé et polarisé de manière à fonctionner en régime de saturation.

Les éléments régulateurs peuvent comporter respectivement au moins un transistor de régulation ayant une grille mise à un autre potentiel de polarisation, le dispositif comprenant en outre :
- des moyens pour appliquer ledit autre potentiel de polarisation à la grille d'une pluralité de transistors de régulation.

Selon une deuxième possibilité, les éléments régulateurs peuvent comporter respectivement :
- des moyens formant un amplificateur différentiel dont une entrée est mise au potentiel de polarisation régulé, et dont la sortie est connectée à la grille du transistor de régulation.

L'amplificateur différentiel peut comporter une entrée mise à un autre potentiel de polarisation, le dispositif comprenant en outre :
- des moyens pour appliquer ledit autre potentiel de polarisation à l'entrée d'une pluralité de d'amplificateurs différentiels.

Le transistor de régulation peut comporter une électrode de source au potentiel de polarisation régulé et une électrode de substrat connectée à ladite électrode de source.

Selon une possibilité de mise en oeuvre, les cellules élémentaires peuvent comporter respectivement :
- au moins un détecteur de rayonnement électromagnétique,
- un ou plusieurs composants électroniques.

Le détecteur peut être un détecteur de rayons X.

Le détecteur peut être un détecteur de rayons X.

Selon une autre possibilité de mise en oeuvre, les cellules élémentaires peuvent être connectées respectivement à :
- au moins un détecteur de rayonnement électromagnétique, situé sur un substrat différent de celui sur lequel sont placées les cellules.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 illustre un dispositif microélectronique matriciel suivant l'art antérieur,
- la figure 2 illustre un dispositif microélectronique matriciel suivant l'invention et formé d'une pluralité de cellules élémentaires,
- la figure 3 illustre une cellule élémentaire d'un dispositif microélectronique matriciel, associée à un premier exemple de moyens régulateurs de tension mis en oeuvre suivant l'invention,
- la figure 4 illustre une cellule élémentaire d'un dispositif microélectronique matriciel, associée à un deuxième exemple de moyens régulateurs de tension mis en oeuvre suivant l'invention,
- la figure 5 illustre une cellule élémentaire d'un dispositif microélectronique matriciel, associée à un troisième exemple de moyens régulateurs de tension mis en oeuvre suivant l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

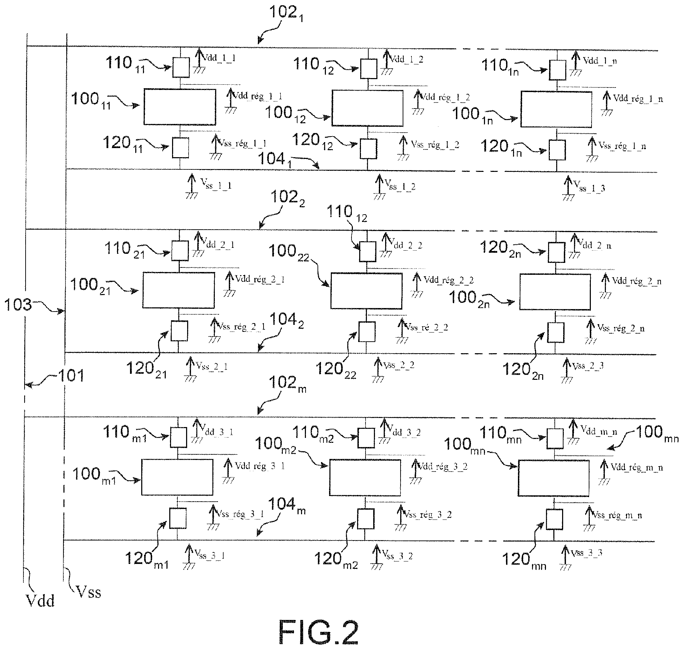

Un exemple de dispositif microélectronique suivant l'invention va à présent être donné en liaison avec la figure 2.

Ce dispositif microélectronique comprend une matrice de n*m cellules élémentaires 100₁₁, 100₁₂, 100₁₃,..., 100₂₁, 100₂₂, 100₂₃ ..., 100₃₃,..., 100ᵢⱼ, 100ₘₙ, avec n qui peut être égal à m et par exemple égal à 2000.

Les cellules élémentaires, peuvent être par exemple des pixels de capteur de rayonnement électromagnétique et peuvent comprendre respectivement au moins un élément détecteur de rayonnement électromagnétique, par exemple un détecteur de rayons X, ainsi qu'un circuit électronique, par exemple un circuit électronique de traitement et/ou d'amplification du signal en sortie du détecteur.

La matrice de cellules élémentaires peut avoir une taille par exemple de l'ordre d'une dizaine de centimètres carrés ou de plusieurs centaines de centimètres carrés, par exemple une dimension de l'ordre de 10 cm x 10 cm ou de 20 cm x 20 cm. Dans le cas d'une matrice de détecteurs de rayons X, les cellules élémentaires peuvent comprendre un photodétecteur sensible à la lumière visible dans chaque pixel, photodiode, photoMOS, diode pincée par exemple, et couplés à des couches scintillatrices, CsI, ou Gd2O2S par exemple, permettant la détection des photons X et les transforment en photons visibles. Des composants par exemple réalisés en technologie CMOS, assurent la détection en transformant les photons visibles en charges électriques.

Le dispositif comporte également une ligne d'alimentation 101 également appelée bus d'alimentation prévue pour délivrer un premier potentiel Vdd, par exemple de l'ordre de 3,3 volts, ainsi qu'une autre ligne 103 servant de ligne de masse également appelé bus de masse et qui est susceptible d'être mise à un deuxième potentiel Vss, par exemple de l'ordre de 0 volt.

Le dispositif peut comprendre également une première pluralité de lignes conductrices 102₁, 102₂, ..., 102ₘ, connectées à la ligne d'alimentation 101 et une deuxième pluralité de lignes conductrices 104₁, 104₂, ..., 104ₘ, connectées à la ligne de masse 103.

Les pixels 100₁₁, 100₁₂, 100₁₃ d'une même rangée, sont reliés électriquement à la ligne d'alimentation 101, par l'intermédiaire d'une même ligne conductrice 102₁ de la première pluralité de lignes conductrices 102₁, 102₂, ..., 102ₘ, et à la ligne 103 de masse par l'intermédiaire d'une même ligne conductrice 104₁ de la deuxième pluralité de lignes conductrices 104₁, 104₂, ..., 104ₘ.

Le dispositif comprend des moyens régulateurs de tension, par exemple sous forme d'une première pluralité de m*n éléments régulateurs 110₁₁, 110₁₂,..., 110₁ₙ, 110₂₁, 110₂₂,..., 110₂ₙ, 110ₘ₁, 110ₘ₂,..., 110ₘₙ et d'une deuxième pluralité de m*n régulateurs 120₁₁, 120₁₂,..., 120₁ₙ, 120₂₁, 120₂₂,..., 120₂ₙ, 120ₘ₁, 120ₘ₂,..., 120ₘₙ.

Dans cet exemple, les pixels de la matrice sont chacun associés à un premier élément régulateur de tension de la première pluralité d'éléments régulateurs situé entre le pixel et la ligne conductrice de la première pluralité de lignes conductrices. Les pixels de la matrice peuvent être également chacun associés à un deuxième élément régulateur de tension de la deuxième pluralité d'éléments régulateurs, situé entre le pixel et la ligne conductrice de la deuxième pluralité de lignes conductrices.

Le premier élément régulateur 110₁ₙ d'un pixel 100₁ₙ reçoit un potentiel Vdd_1_n d'une ligne conductrice 102₁ de la première pluralité de lignes conductrices 102₁, 102₂, ..., 102ₘ, qui peut avoir subi une variation, en particulier une diminution, par rapport au potentiel Vdd auquel est placé la ligne d'alimentation 101. Le premier élément régulateur 110ₙ est polarisé à l'aide du potentiel Vdd_1_n délivré par la ligne conductrice 102₁ connectée à la ligne d'alimentation 101, et prévu pour appliquer sur le pixel 110₁ₙ auquel il est associé, un potentiel d'alimentation régulé Vdd_rég_1_n.

Le deuxième élément régulateur 120₁ₙ d'un pixel 100₁ₙ est connecté à un potentiel Vss_1_n d'une ligne conductrice 104₁ de la deuxième pluralité de lignes conductrices 104₁, 104₂, ..., 104ₘ, qui peut avoir subi une variation par rapport au potentiel Vss auquel est placé la ligne de masse 103. Le deuxième élément régulateur 120₁ₙ est polarisé à l'aide du potentiel Vss_1_n délivré par la ligne conductrice 104₁ connectée à la ligne de masse 103, et prévu pour appliquer sur le pixel auquel il est associé, un potentiel de masse régulé Vss_rég_1_n.

Les potentiels d'alimentation régulés Vdd_rég_1_1, Vdd_rég_1_2, Vdd_rég_1_3,..., Vdd_rég_1_n, Vdd_rég_2_1, Vdd_rég_2_2,..., Vdd_rég_2_n, appliqués respectivement aux pixels 100₁₁, 100₁₂, 100₁₃,..., 100₂₁, 100₂₂, 100₂₃ ..., 100₃₃,... 100ₙₘ sont égaux ou sensiblement égaux entre eux ou diffèrent entre eux de moins de plusieurs dizaines de mV.

Le long d'une rangée de la matrice, les potentiels d'alimentation régulés Vdd_rég_1_1, Vdd_rég_1_2,..., Vdd_rég_1_n, appliqués respectivement aux pixels 100₁₁, 100₁₂, 100₁ₙ de cette rangée, varient peu par rapport aux potentiels Vdd_1_1,..., Vdd_1_n, le long de la ligne conductrice 102₁, de la première pluralité de lignes conductrices.

Une amélioration de l'ordre d'un facteur 10 peut être obtenue.

Les potentiels de masse régulés Vss_rég_1_1, Vss_rég_1_2, Vss_rég_1_2,..., Vss_rég_1_n, Vss_rég_2_1 Vss_rég_2_2,..., Vss_rég_2_n sont sensiblement égaux entre eux ou diffèrent entre eux de moins de plusieurs dizaines de mV.

De même, le long d'une rangée de la matrice, les potentiels d'alimentation régulés Vdd_rég_1_1, Vdd_rég_1_2,..., Vdd_rég_1_n, appliqués respectivement aux pixels 100₁₁, 100₁₂, 100₁ₙ de cette rangée, varient peu par rapport aux potentiels Vdd_1_1,..., Vdd_1_n, le long de la ligne conductrice 102₁, de la première pluralité de lignes conductrices. Une amélioration de l'ordre d'un facteur 10 peut être obtenue.

La présente invention n'est pas non plus limitée à la mise en oeuvre de 2 régulateurs de tension par pixel et peut concerner la mise en oeuvre d'autres régulateurs au niveau des pixels afin de réguler une ou plusieurs autre(s) tension(s) auxiliaire(s), acheminée(s) par une ligne conductrice à une rangée de pixels de la matrice, et dont les pixels ont besoin pour leur fonctionnement.

Selon une variante, un dipositif doté d'un seul régulateur de tension par pixel pour délivrer un potentiel d'alimentation régulé peut être prévu. Selon une autre variante, un seul régulateur de tension par pixel pour délivrer un potentiel de masse régulé, peut être prévu.

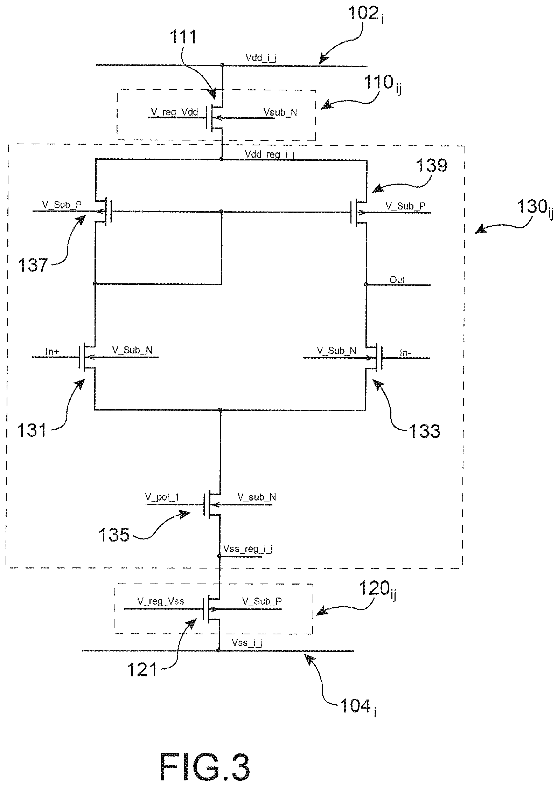

Un exemple de cellule élémentaire intégrée à un dispositif microélectronique suivant l'invention est illustré sur la figure 3.

Sur cette figure, un amplificateur différentiel 130 intégré à un pixel 100ᵢⱼ d'une matrice telle que décrite précédemment en liaison avec la figure 2, sont représentés. L'amplificateur différentiel 130 peut être formé d'une pluralité de transistors, par exemple de 5 transistors 131, 133, 135, 137, 139. Un premier transistor 131, par exemple de type NMOS, et un deuxième transistor 133, par exemple de type NMOS, forment une paire différentielle, et ont une électrode de source commune.

Le premier transistor 131 situé en entrée de l'amplificateur différentiel 130 peut être relié par exemple à un élément détecteur et peut recevoir par exemple un signal analogique Vint sur sa grille, qui forme une entrée non inverseuse In+ de l'amplificateur différentiel, et la grille du deuxième transistor 133 est susceptible quant à elle de former l'entrée non inverseuse In- de l'amplificateur différentiel et peut être mise par exemple à un potentiel de référence ou au potentiel de sortie out de amplificateur 120, de manière à réaliser une fonction d'amplificateur suiveur.

L'électrode de source commune au premier transistor NMOS 131 et au deuxième transistor NMOS 133 est également reliée au drain d'un troisième transistor NMOS 135, qui joue le rôle d'une source de courant et dont la grille est quant à elle mise à un potentiel fixe Vpol1.

L'amplificateur différentiel 130 comprend également un quatrième transistor 137, par exemple de type PMOS et un cinquième transistor 139, par exemple de type PMOS. Le quatrième transistor 137 et le cinquième transistor 139 sont agencés ou montés en miroir de courant. Le quatrième transistor 137 et le cinquième transistor 139 partagent également une région de source commune, mise à un potentiel régulé Vdd_reg_ij. Les électrodes de drain du quatrième transistor 137 et du cinquième transistor 139 sont quant à elles reliées respectivement à l'électrode de drain du premier transistor 131 et à l'électrode de drain du deuxième transistor 133. Le quatrième transistor 137 possède également une électrode de grille et une électrode de drain reliées entre elles.

La sortie de l'amplificateur 130 différentiel, peut être prise au niveau de l'électrode de drain du cinquième transistor 139 et de l'électrode de drain du deuxième transistor 133, et peut être connectée par exemple à un circuit de traitement ou à la sortie du pixel lorsque le pixel est sélectionné pour être lu.

Les transistors 131 et 133 formant la paire différentielle, et le transistor 135 formant la source de courant peuvent être du même type, par exemple de type N, et être connectées à une même électrode de substrat mise au potentiel de substrat V_sub_N, tandis que les transistors formant le miroir de courant peuvent être du même type, par exemple de type P, et être connectées à une électrode de substrat au potentiel de substrat V_sub_P.

Dans cet exemple de dispositif, le premier élément régulateur de tension 110ᵢⱼ est formé d'un transistor régulateur 111, par exemple un transistor MOS de type N, placé entre une ligne conductrice 102ᵢ de la première pluralité de lignes conductrices et entre le pixel 100ᵢⱼ. Le transistor 111 est prévu pour être dans un mode de fonctionnement en saturation, sa grille étant polarisée à un potentiel V_reg_Vdd.

Le potentiel de polarisation V_reg_Vdd peut être appliqué, à plusieurs transistors régulateurs semblables au transistor 111 et prévus comme le transistor 111, pour réguler le potentiel d'alimentation respectivement d'un pixel de la matrice. Le potentiel de polarisation V_reg_Vdd peut être appliqué, par exemple à l'aide d'une ligne conductrice ou d'un réseau ou d'un maillage de lignes appelé « grille » (non représentés) conductrices à plusieurs transistors régulateurs du type du transistor 111.

Le premier transistor 111 a son drain connecté à une ligne conductrice 102ᵢ de la première pluralité de lignes, et qui est à un potentiel Vdd_i_j qui peut avoir subi une variation, en particulier une diminution, par rapport au potentiel d'alimentation Vdd auquel est placée la ligne d'alimentation 101. Le potentiel Vdd_i_j sert de potentiel de polarisation au transistor 111 qui délivre à sa source le potentiel d'alimentation régulé Vdd_rég_i_j, par exemple de l'ordre de 2.2 Volts appliqué au pixel 100ᵢⱼ, dans le cas où Vdd = 3.3 volts et que la chute ohmique maximale est de l'ordre de 0.9 V. La tension locale Vdd_i_j maximale est alors de l'ordre de 3.3-0.9 = 2.4 V. Le transistor 111 régulateur peut réguler à une tension inférieure à 2.4 V avec une marge de l'ordre de 100 mV.

Dans cet exemple de dispositif, le deuxième élément régulateur de tension 120ᵢⱼ est formé d'un transistor 121, par exemple un transistor MOS de type P, placé entre une ligne conductrice 104ᵢ de la deuxième pluralité de lignes conductrices et entre le pixel 100ᵢⱼ. Le transistor 121 est prévu pour être dans un mode de fonctionnement en saturation, sa grille étant polarisée à un potentiel V_reg_Vss prévu à cet effet.

Le potentiel de polarisation V_reg_Vss peut être appliqué, à plusieurs transistors régulateurs semblables au transistor 121 et prévus comme le transistor 121, pour réguler le potentiel de masse respectivement d'un pixel de la matrice. Le potentiel de polarisation V_reg_Vss peut être appliqué, par exemple à l'aide d'une ligne conductrice ou d'un réseau (non représentés) conducteur à plusieurs transistors régulateurs tel que le transistor 121. Le transistor 121 a une électrode connectée à une ligne conductrice 104i de la deuxième pluralité de lignes conductrice, et qui est à un potentiel Vss_i_j qui peut avoir subi une variation, par rapport au potentiel de masse Vss auquel est placé la ligne de masse 103. Le potentiel Vss_i_j sert de potentiel de polarisation au transistor 121 qui délivre à sa source le potentiel de masse régulé Vss_rég_i_j appliqué au pixel 100ᵢⱼ. Le transistor 111 a une autre électrode délivrant un potentiel régulé Vdd_reg_i_j au pixel 100ij.

Le potentiel d'alimentation régulé Vdd_reg est tel qu'au premier ordre :
Vdd_reg = Vreg_Vdd - VTN - Delta_Vdd_reg avec VTN est la tension de seuil du transistor 111, et Delta_Vdd_reg une tension dépendant de la consommation du ou des circuits électronique(s) du pixel.

Le potentiel de masse régulé Vss_reg est tel qu'au premier ordre :
Vss_reg = Vreg_Vss + VTP + DeltaVss_reg avec VTP est la tension de seuil du transistor 121, et Delta_Vss_reg une tension dépendant de la consommation de l'électronique du pixel.

Prenons un exemple avec : Vss = 0 V ; Vdd = 3.3 V ; Vreg_Vdd = 2.8 V ; Vreg Vss = 0.4 V ; VTN = 0.6 V ; VTP = 0.6 V.

On obtient (en Volts):
Vdd_reg = 2.2 - Delta Vddreg ;
et Vss_reg = 1 + Delta Vss reg.

Les transistors 111 et 121 peuvent être mis en oeuvre avec des paramètres W et L de largeur de canal et de longueur de canal de sorte que leur rapport W/L, soit important, par exemple d'au moins 10.

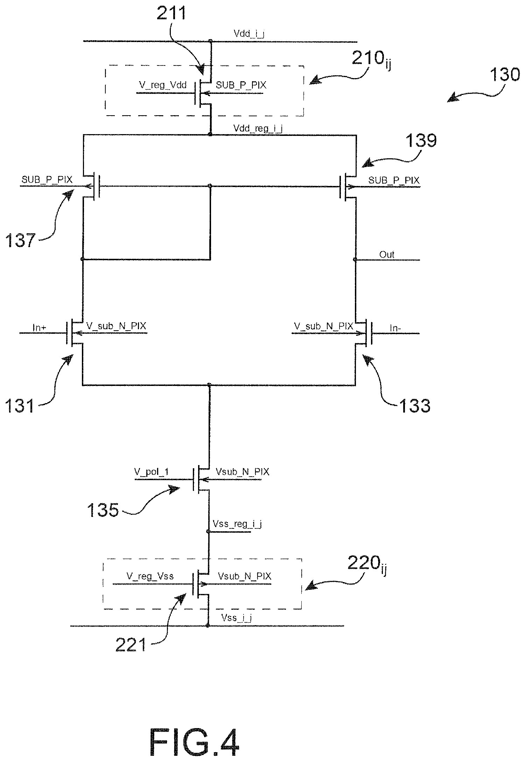

Un autre exemple de dispositif suivant l'invention est illustré sur la figure 4. Ce dispositif est semblable à celui donné en liaison avec la figure 3, mais diffère de par le premier élément régulateur (dans cet exemple noté 210ᵢⱼ) et le deuxième élément régulateur (cette fois noté 220ᵢⱼ).

Le premier élément régulateur de tension 210ᵢⱼ est formé d'un premier transistor 211 régulateur qui peut être de type P et qui a une électrode de substrat mise à un premier potentiel de substrat Vsub_P_pix et connectée à l'électrode de source du transistor 211. Cela peut permettre de s'affranchir des dérives de potentiel de substrat en différents points de la matrice, en rendant le potentiel régulé indépendant du potentiel de substrat. Les autres transistors de type P, par exemple, les transistors 137 et 139 formant le miroir de courant, peuvent être également dotés d'une électrode de substrat commune à celle du premier transistor régulateur 211.

Le deuxième élément régulateur 220ᵢⱼ de tension est formé d'un transistor régulateur 221 qui peut être de type P et qui a une électrode de substrat connectée à l'électrode de source et mise à un deuxième potentiel de substrat Vsub_N_pix. Les autres transistors de type N, par exemple, les transistors 131, et 133, formant la paire différentielle et celui 135 formant le générateur de courant, peuvent être également dotés d'une électrode de substrat connectée au deuxième potentiel de substrat V_sub_N_pix. Cela peut permettre de réduire sur des matrices de tailles importantes, les courants de fuite des transistors par rapport au substrat, ainsi que les injections capacitives de charges lors des commutations des circuits électroniques des pixels.

Dans cet exemple, le potentiel de masse régulé Vss_reg_ij peut servir de potentiel de substrat, pour toutes les électrodes de substrat des transistors de type N, en particulier des transistors 131, 133, 135, 211 sauf, éventuellement, pour des transistors de type N du ou des circuits électroniques du pixel qui peuvent requérir leur propre source connectée à leur propre substrat.

Le potentiel d'alimentation régulé Vdd_reg_ij peut servir de potentiel de substrat pour toutes les électrodes de substrat des transistors de type P, en particulier des transistors 137, 139, 221, sauf éventuellement pour des transistors de type P de l'électronique pixel qui peuvent requérir leur propre source connectée à leur propre substrat.

Pour ce deuxième exemple de réalisation chaque pixel forme un point de consommation de puissance distinct des autres pixels, fonctionnant entre le potentiel d'alimentation régulé Vdd_reg_ij et le potentiel de masse régulé Vss_reg_ij.

Avec par exemple des valeurs de polarisation telles que Vss = 0V, Vdd = 3,3V ; Vreg_Vdd = 2.8 V ; Vreg_Vss = 0,4 V ; VTN = 0,6 V ; VTP = 0.6 V On obtient : Vdd_reg = 2.2 V - Delta_Vdd_reg et
Vss_reg = 1 V + Delta_Vss_reg.

Dans ce cas, les variations de tension internes des transistors entre ses bornes de source, grille, drain et substrat, sont susceptibles de ne pas dépasser 1,2 V.

En effet, le deuxième élément de régulation est polarisé entre 0 et 1 + Delta_Vss_reg, avec son substrat à 1 volt + Delta Vss_reg. Il est possible de prévoir les transistors du dispositif et leurs consommations respectives de sorte que Delta_Vss_reg ne dépasse pas 0,2 V.

Le premier élément de régulation de Vdd_reg est polarisé entre 2,2 - Delta_Vdd_reg et 3,3 V, avec son substrat à 2,2 - Delta_Vdd_reg, on peut concevoir le dispositif de sorte que Delta_Vss_reg ne dépasse pas 0,1 V. Le pixel est polarisé entre 1 V + Delta_Vss_reg et 2,2 V - Delta Vdd reg, avec les électrodes de substrats des transistors 131, 133, 135, 221, de type N à 1 V + Delta_Vss_reg et les électrodes des transistors 137, 139, 211, de type P à 2,2 V - Delta_Vdd_reg.

On peut ainsi utiliser une tension d'alimentation acheminée par la ligne 101 de la matrice de pixels telle que Vdd = 3,3 V tout en conservant des transistors normalement prévus pour une alimentation de 1,2V, ce qui permet de mettre en oeuvre des transistors de taille ou ayant une épaisseur de diélectrique de grille moindre que les transistors polarisables par une tension d'alimentation de 3,3V. Avec un tel dispositif, on peut également admettre des chutes ohmiques de plusieurs centaines de millivolts sur les lignes 102₁, 102₂, ..., 102ₘ, connectées à la ligne d'alimentation 101, ainsi que des variations de potentiel de plusieurs centaines de millivolts sur les lignes 104₁, 104₂, ..., 104ₘ, connectées à la ligne de masse 103, sans que cela entraine une différence de fonctionnement entre les pixels répartis le long de ces lignes.

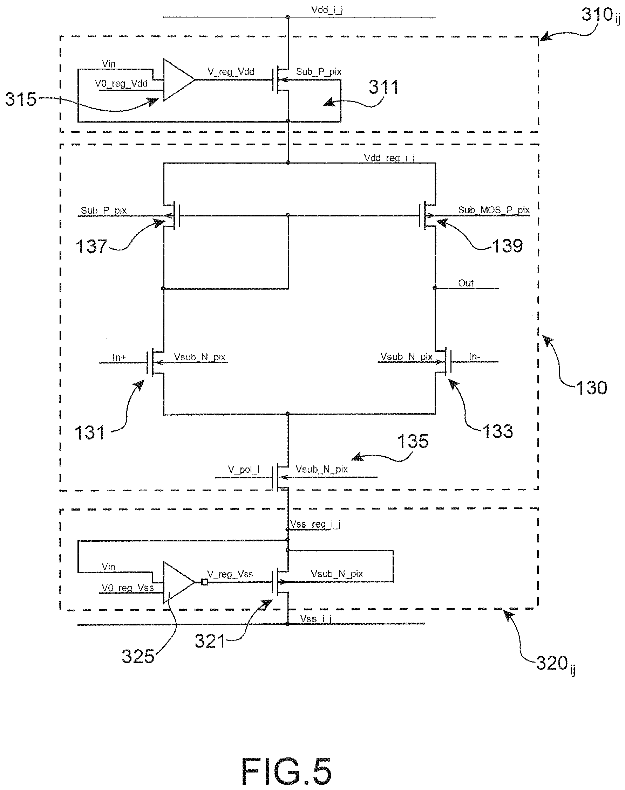

Un autre exemple de dispositif suivant l'invention est illustré sur la figure 5.

Cet exemple de dispositif diffère de celui de la figure 4, en ce que le premier élément régulateur de tension (cette fois noté 310ᵢⱼ) est formé d'un transistor 311 qui peut être de type P, et de moyens formant une boucle de rétroaction avec gain, par exemple à l'aide d'un amplificateur différentiel 315, dont la sortie est connectée à la grille du transistor 311, et dont l'entrée inverseuse est connectée à l'électrode de substrat et de source du transistor 311.

L'entrée non inverseuse de l'amplificateur différentiel 315 est quant à elle mise à un potentiel V0_reg_Vdd qui sert de tension de consigne.

Le potentiel de polarisation V0_reg_Vdd peut être appliqué, à plusieurs éléments régulateurs du potentiel d'alimentation. Le potentiel de polarisation V0_reg_Vdd peut être appliqué, par exemple à l'aide d'une ligne conductrice ou d'un réseau ou d'un maillage de lignes (non représentés) conductrices à plusieurs amplificateurs différentiels du type de l'amplificateur 315. La sortie de l'amplificateur différentiel 315, qui est connectée à la grille du transistor 311, délivre un potentiel V_reg_Vdd.

Selon ce troisième exemple de mise en oeuvre, la commande de grille, V_reg_Vdd du transistor 311 délivrant une tension d'alimentation Vdd_reg_ij, est définie par un amplificateur différentiel de gain G, comparant le potentiel d'alimentation régulé Vdd_reg_ij et la tension de consigne V0_reg_Vdd. On ajuste ainsi le potentiel de source du transistor 311, qui est également le potentiel régulé à V0_reg_Vdd. On peut s'affranchir ainsi de dérives de la tension de seuil du transistor de régulation et des dérives dues au procédé de réalisation.

Le deuxième élément régulateur 320ᵢⱼ de tension, est formé quant à lui d'un transistor 321 qui peut être de type N, et de moyens formant un amplificateur différentiel 325, dont la sortie est connectée à la grille du transistor 311, et dont l'entrée inverseuse est connectée à l'électrode de source et à l'électrode de substrat du transistor 321, tandis que l'autre entrée de l'amplificateur différentiel 325 est mise à un potentiel V0_reg_Vss, qui sert de tension de consigne. La sortie de l'amplificateur différentiel 325, qui est connectée à la grille du transistor 321, délivre un potentiel V_reg_Vss.

De même, la commande de grille, V_reg_Vss du transistor 121 régulant le potentiel de masse Vss_reg_ij, est définie par un amplificateur différentiel de gain G, comparant le potentiel de masse régulé Vss_reg et la tension de consigne V0_reg_Vss.

Un tel montage permet d'obtenir: Vdd_reg = V0_reg_Vdd + l/G( - VTN - Delta_Vdd_reg) Vss_reg = V0_reg_Vss + l/G (VTP + Delta_Vss_reg). Les potentiels régulés Vdd_reg et Vss_reg sont ainsi mieux définis.

Dans les exemples de réalisation précédemment décrits en liaison avec les figures 3, 4, et 5, les éléments régulateurs 110ij, 120ij, 210ij, 220ij, 310ij, 320ij, ne consomment pas ou consomment peu de courant sur leur entrées respectives connectées chacune à un potentiel de régulation V_reg_Vss ou V_reg_Vdd. En effet, dans ces exemples, le potentiel de régulation est appliquée à une grille de transistor (ce transistor étant noté 111 pour l'élément régulateur 110ij, 121 pour l'élément régulateur 120ij, 211 pour l'élément régulateur 210ij, 221 pour l'élément régulateur 220ij, 311 pour l'élément régulateur 310ij, 321 pour l'élément régulateur 320ij. Il y a donc une chute ohmique faible ou négligeable sur le réseau ou sur la ou les lignes conductrices distribuant respectivement les potentiels de régulation V_reg_Vss ou V_reg_Vdd.

Selon une variante, les potentiels de régulation V_reg_Vss et/ou V_reg_Vdd peuvent être implémentés au niveau de chaque pixel, à l'aide de cellules de type communément appelé « bandgap », permettant d'imposer une tension de référence. Le document : « A sub-1 volt CMOS Bandgap voltage Reference based on body driven technique », Aldokhaiel et al., Regular Session A, IEEE 2004*.*

## Revendications

1. Dispositif microélectronique matriciel comprenant :
- une pluralité de cellules agencées (100₁₁,..., 100ₘₙ) selon une matrice,
- une ou plusieurs lignes conductrices (102₁, ..., 102ₘ, 104₁, ..., 104ₘ) prévues pour acheminer un potentiel donné (Vdd, Vss) et auxquelles respectivement une ou plusieurs cellules d'une rangée de cellules de la matrice sont reliées,
- une pluralité d'éléments régulateurs (110₁₁, ..., 110ₘₙ, 120₁₁, ..., 120ₘₙ) de tension,
lesdits éléments régulateurs étant connectés respectivement entre une cellule de ladite pluralité de cellules et une desdites lignes conductrices, dans lequel chacun desdits éléments régulateurs est respectivement connecté à une seule cellule parmi ladite pluralité de cellules,
ledit potentiel donné servant de potentiel de polarisation desdits éléments régulateurs, lesdits éléments régulateurs étant prévus respectivement pour appliquer à chaque cellule de ladite pluralité de cellules un potentiel de polarisation régulé (V_reg_Vdd, V_reg_Vss).

2. Dispositif microélectronique matriciel selon la revendication 1, dans lequel lesdites lignes conductrices comprennent une ou plusieurs lignes conductrices d'alimentation (102₁, ..., 102ₘ) prévues pour acheminer un potentiel d'alimentation (Vdd),
le dispositif comprenant parmi ladite pluralité d'éléments régulateurs de tension, un ou plusieurs éléments régulateurs (110₁₁,..., 110ₘₙ) de potentiel d'alimentation, lesdits éléments régulateurs de potentiel d'alimentation étant connectés respectivement entre une cellule de ladite pluralité de cellules et une desdites lignes conductrices d'alimentation, polarisés à l'aide du potentiel d'alimentation (Vdd), et prévus respectivement pour appliquer à ladite cellule un potentiel d'alimentation régulé (Vdd_reg).

3. Dispositif microélectronique matriciel selon la revendication 1 ou 2, dans lequel lesdites lignes conductrices comprennent une ou plusieurs lignes conductrices (104₁, ..., 104ₘ) prévues pour être placées à un potentiel de référence ou de masse (Vss), le dispositif comprenant parmi ladite pluralité d'éléments régulateurs de tension un ou plusieurs éléments régulateurs (120₁₁, ..., 120ₘₙ) de potentiel de masse, lesdits éléments régulateurs de potentiel de masse étant polarisés à l'aide du potentiel de masse (Vss) et prévus respectivement pour appliquer à ladite cellule un potentiel de masse régulé (Vss_reg).

4. Dispositif microélectronique matriciel selon l'une des revendications 1 à 3, les éléments régulateurs (110₁₁, ..., 110ₘₙ, 120₁₁, ..., 120ₘₙ) comportant respectivement au moins un transistor de régulation (111, 121, 211, 221, 311, 321), prévu pour être agencé et polarisé de manière à fonctionner en régime de saturation.

5. Dispositif microélectronique matriciel selon la revendication 4, dans lequel les éléments régulateurs comportent respectivement au moins un transistor de régulation (111, 121, 211, 221, 311, 321) ayant une grille mise à un autre potentiel de polarisation (V_reg_Vdd, V_reg_Vss), le dispositif comprenant en outre :
- des moyens pour appliquer ledit autre potentiel de polarisation (V_reg_Vdd, V_reg_Vss) à la grille d'une pluralité de transistors de régulation.

6. Dispositif microélectronique selon la revendication 4, les éléments régulateurs comportant respectivement :
- des moyens formant un amplificateur différentiel (315, 325) dont une entrée est mise au potentiel de polarisation régulé (Vss_reg_ij, Vdd_reg_ij), et dont la sortie est connectée à la grille du transistor de régulation.

7. Dispositif microélectronique selon la revendication 6, dans lequel l'amplificateur différentiel (315, 325), comporte une entrée mise à un autre potentiel de polarisation (V0_reg_Vdd, V0_reg_Vss), le dispositif comprenant en outre :
- des moyens pour appliquer ledit autre potentiel de polarisation (V0_reg_Vdd, V0_reg_Vss) à l'entrée d'une pluralité d'amplificateurs différentiels.

8. Dispositif microélectronique selon l'une des revendications 4 à 7, dans lequel le transistor (211, 221, 311, 321) comporte une électrode de source au potentiel de polarisation régulé (V_reg_Vdd, V_reg_Vss) et une électrode de substrat connectée à ladite électrode de source.

9. Dispositif microélectronique selon l'une des revendications 1 à 8, les cellules élémentaires comportant respectivement : au moins un détecteur de rayonnement électromagnétique.

10. Dispositif microélectronique selon la revendication 9, le détecteur étant un détecteur de rayons X.

## Patentansprüche

1. Mikroelektronische Matrixvorrichtung, enthaltend:
- eine Mehrzahl von Zellen (100₁₁, ..., 100ₘₙ), die in einer Matrix angeordnet sind,
- eine oder mehrere Leiterbahnen (102₁, ..., 102ₘ, 104₁, ..., 104ₘ), die dazu vorgesehen sind, ein gegebenes Potential (Vdd, Vss) weiterzuleiten, und mit denen eine oder mehrere jeweilige Zellen einer Reihe von Zellen der Matrix verbunden sind,
- eine Mehrzahl von Spannungsreglerelementen (110₁₁, ..., 110ₘₙ, 120₁₁, ..., 120ₘₙ),
wobei die Reglerelemente jeweils zwischen einer Zelle aus der Mehrzahl von Zellen und einer der Leiterbahnen geschaltet sind, wobei jedes der Reglerelemente jeweils mit einer einzigen Zelle aus der Mehrzahl von Zellen verbunden ist,
wobei das gegebene Potential als Vorspannungspotential der Reglerelemente dient, wobei die Reglerelemente jeweils dazu vorgesehen sind, an jede Zelle aus der Mehrzahl von Zellen ein geregeltes Vorspannungspotential (V_reg_Vdd, V_reg_Vss) anzulegen.

2. Mikroelektronische Matrixvorrichtung nach Anspruch 1, wobei die Leiterbahnen eine oder mehrere Versorgungsleiterbahnen (102₁, ..., 102ₘ) enthalten, die dazu vorgesehen sind, ein Versorgungspotential (Vdd) weiterzuleiten,
wobei die Vorrichtung aus der Mehrzahl von Spannungsreglerelementen ein oder mehrere Versorgungspotentialreglerelemente (110₁₁, ..., 110ₘₙ) enthält, wobei die Versorgungspotentialreglerelemente jeweils zwischen einer Zelle aus der Mehrzahl von Zellen und einer der Versorgungsleiterbahnen (Vdd) geschaltet ist, die mit Hilfe des Versorgungspotentials (Vdd) vorgespannt sind, und jeweils dazu vorgesehen sind, an die Zelle ein geregeltes Versorgungspotential (Vdd_reg) anzulegen.

3. Mikroelektronische Matrixvorrichtung nach Anspruch 1 oder 2, wobei die Leiterbahnen eine oder mehrere Leiterbahnen (104₁, ..., 104ₘ) enthalten, die dazu vorgesehen sind, an ein Referenz- oder Massepotential (Vss) angelegt zu werden, wobei die Vorrichtung aus der Mehrzahl von Spannungsreglerelementen ein oder mehrere Massepotentialreglerelemente (120₁₁, ..., 120ₘₙ) enthält, wobei die Massepotentialreglerelemente mit Hilfe des Massepotentials (Vss) vorgespannt sind, und jeweils dazu vorgesehen sind, an die Zelle ein geregeltes Massepotential (Vss_reg) anzulegen.

4. Mikroelektronische Matrixvorrichtung nach einem der Ansprüche 1 bis 3, wobei die Reglerelemente (110₁₁, ..., 110ₘₙ, 120₁₁, ..., 120ₘₙ) jeweils zumindest einen Regelungstransistor (111, 121, 211, 221, 311, 321) enthalten, der dazu vorgesehen ist, so angeordnet und vorgespannt zu werden, dass er im Sättigungszustand betrieben wird.

5. Mikroelektronische Matrixvorrichtung nach Anspruch 4, wobei die Reglerelemente jeweils zumindest einen Regelungstransistor (111, 121, 211, 221, 311, 321) enthalten, der ein Gate aufweist, das an ein weiteres Vorspannungspotential (V_reg_Vdd, V_reg_Vss) angelegt ist, wobei die Vorrichtung ferner enthält:
- Mittel zum Anlegen des weiteren Vorspannungspotentials (V_reg_Vdd, V_reg_Vss) an das Gate einer Mehrzahl von Regelungstransistoren.

6. Mikroelektronische Vorrichtung nach Anspruch 4, wobei die Reglerelemente jeweils enthalten:
- Mittel, die einen Differenzverstärker (315, 325) bilden, von dem ein Eingang an das geregelte Vorspannungspotential (Vss_reg_ij, Vdd_reg_ij) angelegt ist und von dem der Ausgang an das Gate des Regelungstransistors angeschlossen ist.

7. Mikroelektronische Vorrichtung nach Anspruch 6, wobei der Differenzverstärker (315, 325) einen Eingang enthält, der an ein weiteres Vorspannungspotential (V0_reg_Vdd, V0_reg_Vss) angelegt ist, wobei die Vorrichtung ferner enthält:
- Mittel zum Anlegen des weiteren Vorspannungspotentials (V0_reg_Vdd, V0_reg_Vss) an den Eingang einer Mehrzahl von Differenzverstärkern.

8. Mikroelektronische Vorrichtung nach einem der Ansprüche 4 bis 7, wobei der Transistor (211, 221, 311, 321) eine Source-Elektrode am geregelten Vorspannungspotential (V_reg_Vdd, V_reg_Vss) und eine Substrat-Elektrode enthält, die an die Source-Elektrode angeschlossen ist.

9. Mikroelektronische Vorrichtung nach einem der Ansprüche 1 bis 8, wobei die Elementarzellen jeweils enthalten: zumindest einen Detektor für elektromagnetische Strahlung.

10. Mikroelektronische Vorrichtung nach Anspruch 9, wobei der Detektor ein Röntgenstrahlendetektor ist.

## Claims

1. Matrix microelectronic device comprising:
- a plurality of cells arranged (100₁₁, ..., 100ₘₙ) according to a matrix,
- one or several conductive lines (102₁, ..., 102ₘ, 104₁, ..., 104ₘ) provided to carry a given potential (Vdd, Vss) and to which respectively one or several cells of a row of cells of the matrix are linked,
- a plurality of voltage regulating elements (110₁₁, ..., 110ₘₙ, 120₁₁, ..., 120ₘₙ),
wherein said regulating elements are each connected between a cell of said plurality of cells and one of said conductive lines, wherein said regulating elements is respectively connected to a single cell among said plurality of cells,
said given potential serving as polarisation potential of said regulating elements, said regulating elements are respectively provided to apply to said given cell a regulated polarisation potential (V_reg_Vdd, V_reg_Vss).

2. Matrix microelectronic device according to claim 1, in which said conductive lines comprise one or several conductive supply lines (102₁, ..., 102ₘ) provided to carry a supply potential (Vdd),
wherein the device comprises among said plurality of voltage regulating elements, one or several supply potential regulating elements (110₁₁, ..., 110ₘₙ), wherein said supply potential regulating elements are connected respectively between a cell of said plurality of cells and one of said conductive supply lines, polarised by means of the supply potential (Vdd), and respectively provided to apply to said cell a regulated supply potential (Vdd_reg).

3. Matrix microelectronic device according to claim 1 or 2, wherein said conductive lines comprise one or several conductive lines (104₁,..., 104ₘ) provided to be placed at a reference or ground (Vss) potential, the device comprising among said plurality of voltage regulating elements one or several ground potential regulating elements (120₁₁, ..., 120ₘₙ), wherein said ground potential regulating elements are polarised by means of the ground potential (Vss) and respectively provided to apply to said cell a regulated ground potential (Vss_reg).

4. Matrix microelectronic device according to one of claims 1 to 3, wherein the regulating elements (110₁₁, ..., 110ₘₙ, 120₁₁, ..., 120ₘₙ) comprise respectively at least one regulation transistor (111, 121, 211, 221, 311, 321), provided to be arranged and polarised in such a way as to function in saturation regime.

5. Matrix microelectronic device according to claim 4, in which the regulating elements comprise respectively at least one regulation transistor (111, 121, 211, 221, 311, 321) having a gate placed at another polarisation potential (V_reg_Vdd, V_reg_Vss), the device further comprising:
- means to apply said other polarisation potential (V_reg_Vdd, V_reg_Vss) to the gate of a plurality of regulation transistors.

6. Microelectronic device according to claim 4, the regulating elements comprising respectively:
- means forming a differential amplifier (315, 325) in which one input is placed at the regulated polarisation potential (Vss_reg_ij, Vdd_reg_ij), and in which the output is connected to the gate of the regulation transistor.

7. Microelectronic device according to claim 6, in which the differential amplifier (315, 325), comprises one input placed at another polarisation potential (V0_reg_Vdd, V0_reg_Vss), the device further comprising:
- means to apply said other polarisation potential (V0_reg_Vdd, V0_reg_Vss) at the input of a plurality of differential amplifiers.

8. Microelectronic device according to one of claims 4 to 7, in which the transistor (211, 221, 311, 321) comprises a source electrode at the regulated polarisation potential (V_reg_Vdd, V_reg_Vss) and a substrate electrode connected to said source electrode.

9. Microelectronic device according to one of claims 1 to 8, the elementary cells comprising respectively: at least one electromagnetic radiation detector.

10. Microelectronic device according to claim 9, wherein the detector is an X-ray detector.
